**Europäisches Patentamt**

(19) **European Patent Office**

**Office européen des brevets**

(11) Publication number : **0 484 255 B1**

(12) **EUROPEAN PATENT SPECIFICATION**

(45) Date of publication of patent specification :
20.07.94 Bulletin 94/29

(51) Int. Cl.$^5$ : **C09K 11/67, G21K 4/00**

(21) Application number : **91420381.5**

(22) Date of filing : **25.10.91**

(54) **Ordered corundum magnesium tantalum niobium oxide x-ray intensifying screens.**

(30) Priority : **01.11.90 US 607945**

(43) Date of publication of application :
**06.05.92 Bulletin 92/19**

(45) Publication of the grant of the patent :
**20.07.94 Bulletin 94/29**

(84) Designated Contracting States :
**DE FR GB**

(56) References cited :
**EP-A- 0 363 977**

(73) Proprietor : **EASTMAN KODAK COMPANY (a
New Jersey corporation)
343 State Street
Rochester New York 14650 (US)**

(72) Inventor : **Sieber, Kurt DeLance, c/o EASTMAN
KODAK COMPANY
Patent Department,
343 State Street
Rochester, New York 14650-2201 (US)**
Inventor : **Todd, Lisa Baxter, c/o EASTMAN
KODAK COMPANY
Patent Department,
343 State Street
Rochester, New York 14650-2201 (US)**
Inventor : **Sever, Byron Ross, c/o EASTMAN
KODAK COMPANY
Patent Department,
343 State Street
Rochester, New York 14650-2201 (US)**

(74) Representative : **Parent, Yves et al
Kodak-Pathé
Département Brevets et Licences
Centre de Recherches et de Technologie
Zone Industrielle
F-71102 Chalon-sur-Saône Cédex (FR)**

## Description

This invention relates to a class of materials highly suitable for radiography. It particularly relates to an x-ray intensifying screen utilized to minimize time of exposure to x-rays.

In the radiographic art, intensifying screens are used in order to diminish the time of exposure of an object in producing its image in a radiographic silver halide element. These intensifying screens comprise phosphors, i.e., substances which fluoresce under exposure to x-rays or other types of excitations, such as ultraviolet and gamma rays. Typical phosphors used in the preparation of radiographic intensifying screens include gadolinium oxysulfide, zinc sulfide, magnesium tungstate, barium lead sulfate, and yttrium tantalate. Calcium tungstate was the first widely used phosphor and remains a standard phosphor against which new x-ray intensifying screen phosphors are tested.

The effect and desirability of various phosphor-containing screens can be measured by the light intensity of the radiation given off by the screen upon exposure to x-ray radiation. Further, it is important that the screen have a high degree of brightness when being exposed to the x-rays but have little persistence of phosphorescence, also called afterglow, as any afterglow or persistent image will affect the quality of later x-ray photographs (radiographs) by causing ghost images.

There have been proposed other combinations of materials for use in x-ray intensifying screens, also called x-ray conversion screens. U. S. Patent 3,829,700-Buchanan et al proposed that oxysulfides of lanthanum, gadolinium or lutetium activated with trivalent terbium be utilized. In U. S. Patent 3,778,615-Luckey it is proposed that alkaline earth sulfates such as strontium barium sulfate activated with lanthanides be utilized. In U. S. Patent 4,259,588-Luckey et al it is proposed that a blue light absorber be added to the x-ray intensifying screen. In U. S. Patent 4,068,129-Rabatin it is proposed that oxybromides of lanthanum and gadolinium be utilized in x-ray image converters. In U. S. 4,507,560-Mathers et al a terbium-activated gadolinium oxysulfide x-ray intensifier is proposed.

The discovery of phosphors useful in the field of radiography and particularly as active components of x-ray intensifying screens has remained a trial and error process. It is not possible to predict the x-ray stimulated luminescence of a material based solely on the presence of one or even two or more particular elements. The crystal structure of a phosphor is at least equally important to successful stimulation as the particular choice of elements and in practice it is the selection of elements, their proportions and the crystal structure they form that controls whether a particular crystalline compound will luminesce when stimulated by x-radiation. Further, the presence of even minute amounts of additional elements can quench, enhance or dramatically shift the wavelength of stimulated emissions. Finally, a compound that can be efficiently stimulated by radiation of another wavelength (e.g., uv radiation) often will not respond with similar efficiency when stimulated by x-radiation.

Magnesium tantalates having an ordered corundum crystal structure have been long known in the art. In the investigations of these magnesium tantalates ultraviolet stimulation has been observed to produce luminescence. The luminescence of magnesium tantalates, and niobates has been discussed in literature articles: Journal of Solid State Chemistry 3, 69-74 (1971) entitled "Luminescence in Some Tantalate Host Lattices", authors G. Blasse and A. Bril; Journal of Solid State Chemistry 72, 72-79 (1988) entitled "The Influence of Crystal Structure on the Luminescence of Tantalates and Niobates" authored by G. Blasse; and Journal of Solid State Chemistry 19, 221-226 (1976) entitled "Luminescence in the System $Mg_4Ta_{2-x}Nb_xO_9$, author A.J.H. Macke. However, the literature does not disclose the utilization of magnesium tantalates or niobates for x-ray intensifying screens.

Some tantalum containing compounds other than those exhibiting an ordered corundum crystal structure have been recognized to luminesce when stimulated with x-rays. Yttrium tantalates in which a minor portion of the yttrium is replaced with at least one trivalent activator are disclosed by Larach U.S. Patent 4,024,069. Niobium-activated and rare earth-activated yttrium, lutetium, and gadolinium tantalates are illustrated by Brixner U. S. Patent 4,225,653. In addition, Tokyo Shibaura published Japanese application, Publication No. 24155/1973, published July 19, 1973, discloses a manganese activated magnesium tantalate to be red emitting when stimulated by x-rays. This phosphor has a much higher ratio of magnesium to tantalum than can be accomodated within an ordered corundum crystal structure.

Sieber European Patent publication 363,977, published April 18, 1990, discloses a magnesium tantalum niobium oxide phosphor having an ordered corundum crystal structure prepared in the presence of a potassium sulfate fluxing agent. Intensifying screens containing the phosphors are disclosed.

There remains a need for improved phosphors that are brighter than conventional blue emitting calcium tungstate phosphors. Further, there is a need for x-ray intensifying screens composed of stable chemical compounds that will not hydrolyze and do not require expensive forming techniques. Further, there is a need for improved x-ray intensifying screens that emit light in the wavelengths where the x-ray photographic films are sensitive. There is a particular need for improved phosphors that will emit in the blue region where silver halides have native light sensitivity.

An object of the invention is to overcome disadvantages of prior x-ray intensifying screens.

Another object of the invention is to provide improved x-ray intensifying screens that are easy to form.

A further object of the invention is to provide stable x-ray intensifying screens that do not hydrolyze to a disadvantageous degree.

An additional object is to provide a primarily blue emitting x-ray intensifying screen.

These and other objects of the invention are generally accomplished by providing an x-ray intensifying screen comprised of a support and a fluorescent layer containing a polymeric binder and a particulate phosphor.

The intensifying screen is characterized in that the particulate phosphor is in an ordered corundum crystalline form consisting essentially of

$$Mg_4Ta_{2-2x}Nb_{2x}O_9:M_yM'_{y'}$$

where

M is at least one of rubidium and cesium,

M' is at least one of sodium and potassium,

x is in the range of from $5 \times 10^{-4}$ to 0.2,

y is an activating amount, and

y + y' is less than 1.0.

The invention provides numerous advantages over prior x-ray intensifying phosphors and screens. The phosphors are bright enough to be used in improved x-ray intensifying screens. The phosphors are prepared by heating in air and are stable compounds that do not exhibit hydrolysis problems. Another advantage is that the phosphors of the invention emit light primarily in the blue wavelength region of the spectrum where existing x-ray films are sensitive. Therefore, new films do not have to be formulated to take advantage of the improved x-ray intensifying screens of the invention. The screens of the invention will serve to improve the performance of the present films. These and other advantages of the invention will be apparent from the drawings and the description below.

The intensifying screens of the invention can take any convenient conventional form apart from the phosphor selection. A typical x-ray intensifying screen according to the invention includes a support and a fluorescent layer containing a polymeric binder and particulate phosphor. Although not required for performance, a transparent overcoat or protective layer is coated over the fluorescent layer for physical protection of the latter during use.

The x-ray intensifying screens of this invention employ a particulate phosphor which is in an ordered corundum crystalline form consisting essentially of

$$(I) \qquad Mg_4Ta_{2-2x}Nb_{2x}O_9:M_yM'_{y'}$$

where

M is at least one of rubidium and cesium,

M' is at least one of sodium and potassium,

x is in the range of from $5 \times 10^{-4}$ to 0.2,

y is an activating amount, and

y + y' is less than 1.0.

To achieve higher levels of luminescence upon x-ray stimulation the niobium content of the phosphor is preferably in the range of from 0.5 to 10 mole percent (x = 0.005 to 0.1). Preferred concentrations of rubidium, cesium or combinations thereof are realized when y is at least 0.002, with optimum luminescence being achieved when y is at least $5 \times 10^{-3}$. Although maximum levels of rubidium, cesium or combinations thereof can range upwardly to values at which y is less than 1.0, the highest levels of luminescence are observed well below maximum concentrations. It is generally preferred that y be less than 0.5 and optimally less than 0.2.

No alkali metal other than rubidium or cesium need be incorporated in the phosphor to achieve the highest levels of luminescence. It has been observed that, when lithium is incorporated into the phosphor, its luminescence is sharply curtailed. The same results obtain when lithium is combined with any one or combination of the other alkali metals.

On the other hand, it has been observed that the incorporation of sodium, though failing to function as an activator, is not incompatible with obtaining higher luminescence by incorporating rubidium, cesium or combinations of both. Thus, it is specifically contemplated to employ combinations of M and Na within the respective y and y + y' range limits identified above. It has been further discovered that, when potassium is employed in combination with rubidium, cesium or a combination of both, the alkali metal combination appears as effective as using M alone as an activator.

When M is at least one of rubidium and cesium and M' is at least one of sodium and potassium, it is preferred that y be at least 2 X $10^{-3}$ (optimally at least 5 X $10^{-3}$) and that y + y′ be less than 0.5 (optimally less than 0.2).

The alkali metal activated ordered corundum magnesium tantalum niobium oxide crystal structure phosphors can be made by conventional ceramic powder processing. This involves the mixing of the proper molar proportions of magnesium oxide, tantalum oxide and niobium oxide by grinding in a mortar to fine particle size and then firing to about 1400°C, optionally with intermediate grinding and refiring. The materials also may be processed with a flux at lower firing temperatures. Alkali metal salts capable of decomposing to the corresponding alkali metal oxide at temperatures up to about 1000°C are particularly useful as fluxing agents. The other metals can also, if desired, be initially provided in the form of salts capable of being thermally decomposed to the corresponding oxides. Nitrate, chloride, carbonate and carboxylate salts are all specifically contemplated as starting materials. An excess of the alkali metal can be tolerated during firing without adverse effect, since the crystal structure of the phosphor limits the maximum concentration of associated activator to useful levels. Specific illustrations of phosphor preparation procedures are provided in the examples below. After firing, the particles are ground to a particle size suitable for forming the x-ray intensifying screens of the invention. The median particle size utilized is generally between about 0.5 and about 40 mm. A median particle size of between 1 and about 20 mm is preferred for ease of screen formulation, as well as optimizing the screen properties, such as speed, sharpness and noise.

The intensifying screens of the invention containing the alkali metal activated magnesium tantalum niobium oxide phosphor are formed by conventional coating techniques where the powders are mixed with a solution of a resin binder material and coated by means such as blade coating onto a substrate. The alkali metal activated magnesium tantalum niobium oxide containing layer of the invention then may be overcoated with a protective layer. It is understood that both the protective layer, and the resin forming the matrix into which the phosphor particles are held are preferably formed of transparent resins that do not interfere with the passage of either x-rays or the emitted light from the phosphors.

While it is in theory possible to prepare a luminescent layer that does not contain any ingredient other than the phosphor itself, in practice the luminescent layer of an intensifying screen contains in addition to phosphor particles a polymeric binder to give structural coherence to the luminescent layer. In general the binders useful in the practice of the invention are those conventionally employed in the art. Binders are generally chosen from a wide variety of known organic polymers which are transparent to x-rays and emitted light. Binders commonly employed in the art include sodium o-sulfobenzaldehyde acetal of poly(vinyl alcohol); chlorosulfonated poly(ethylene); a mixture of macromolecular bisphenol poly(carbonates) and copolymers comprising bisphenol carbonates and poly(alkylene oxides); aqueous ethanol soluble nylons; poly(alkyl acrylates and methacrylates) and copolymers of poly(alkyl acrylates and methacrylates with acrylic and methacrylic acid); poly(vinyl butyral); and poly(urethane) elastomers. These and other useful binders are disclosed in U.S. Patents 2,502,529; 2,887,379; 3,617,285; 3,300,310; 3,300,311; and 3,743,833; and in Research Disclosure, Vol. 154, February 1977, Item 15444, and Vol. 182, June 1979. Research Disclosure is published by Kenneth Mason Publications, Ltd., Emsworth, Hampshire P010 7DD, England. Particularly preferred binders are poly(urethanes), such as those commercially available under the trademark Estane from Goodrich Chemical Co., the trademark Permuthane from the Permuthane Division of ICI, and the trademark Cargill from Cargill, Inc.

Any conventional ratio of phosphor to binder can be employed. Generally thinner phosphor layers and sharper images are realized when a high weight ratio of phosphor to binder is employed. Preferred phosphor to binder ratios are in the range of from about 7:1 to 25:1 for screen constructions intended to withstand commercial screen exposure repetitions without loss of structural integrity. For limited or single exposure applications it is, of course, appreciated that any minimal amount of binder consistent with structural integrity is satisfactory.

In those instances in which it is desired to reduce the effective thickness of a phosphor layer below its actual thickness the phosphor layer is modified to impart a small, but significant degree of light absorption. If the binder is chosen to exhibit the desired degree of light absorption, then no other ingredient of the phosphor layer is required to perform the light attenuation function. For example, a slightly yellow polymer will absorb a significant fraction of phosphor emitted blue light. Ultraviolet absorption can be similarly achieved. It is specifically noted that the less structurally complex chromophores for ultraviolet absorption particularly lend themselves to incorporation in polymers.

In most instances a separate absorber is incorporated in the phosphor layer to reduce its effective thickness. The absorber can be a dye or pigment capable of absorbing light within the spectrum emitted by the phosphor. Yellow dye or pigment selectively absorbs blue light emissions and is particularly useful with a blue emitting phosphor. On the other hand, a green emitting phosphor is better used in combination with magenta dyes or pigments. Ultraviolet emitting phosphors can be used with known ultraviolet absorbers. Black dyes and pigments are, of course, generally useful with phosphors, because of their broad absorption spectra. Carbon black is a preferred light absorber for incorporation in the phosphor layers. Luckey and Cleare U.S. Patent 4,259,588 teaches that increased sharpness (primarily attributable to reduced crossover, discussed below) can be achieved by incorporating a yellow dye in a terbium-activated gadolinium oxysulfide phosphor layer.

Apart from the phosphor layers and the assembly features described above, the screen can be of any conventional construction. The screen supports are most commonly film supports of high dimensional integrity, such as poly(ethylene terephthalate) film supports. For best image definition, when the front screen support and subbing and anticurl layers are transparent, the phosphor layer either contains an absorber or a black surface is positioned adjacent to the anticurl layer during exposure. For example, a black poly(vinyl chloride) or paper sheet can be positioned adjacent to the anticurl layer. Typically the adjacent interior surface of the cassette in which the assembly is mounted is a black polyurethane (or similar polymeric) foam layer, which can be relied upon for light absorption contributing to image sharpness. When the screen supports are not themselves black, best sharpness levels are realized when a black film or paper is interposed between the cassette and each screen of the image recording assembly. Independently of cassette construction the front screen support and/or its subbing and anticurl layers can be black or suitably colored to absorb emitted light, thereby minimizing light reflection and image sharpness degradation. The back screen support as well as its subbing and anticurl layers can be of the same form as described for the front screen. If desired to increase speed, both the front and back screen supports and/or their subbing and anticurl layers can be reflective of emitted light.

For example, a blue or white back screen support can be chosen to reflect light emitted by calcium tungstate or rare earth-activated yttrium tantalate or a green or white support can be chosen to reflect light emitted from a rare earth-activated lutetium or gadolinium oxysulfide phosphor. Titania is preferably coated on or incorporated in the front and back screen supports to maximize reflection of green light. Metal layers, such as aluminum, can be used to enhance reflection. Paper supports, though less common for intensifying screens than film supports, are known and can be used for specific applications. Dyes and pigments are commonly loaded into supports to enhance absorption or reflection of light. Air can be trapped in supports to reflect ultraviolet and visible light. Intensifying screen supports and the subbing layers used to improve coating adhesion can be chosen from among those employed for silver halide photographic and radiographic elements, as illustrated by Research Disclosure, Vol. 176, December 1978, Item 17643, Section XVII, and Research Disclosure, Vol. 184, August 1979, Item 18431, Section I.

An overcoat, though not required, is commonly located over the phosphor layer for humidity and wear protection. The overcoat can be chosen using the criteria described above for the binder. The overcoat can be chosen from among the same polymers used to form either the screen binder or the support, with the requirements of toughness and scratch resistance usually favoring polymers conventionally employed for film supports. For example, cellulose acetate is a preferred overcoat used with the preferred poly(urethane) binders. Overcoat polymers are often used also to seal the edges of the phosphor layer.

While anticurl layers are not required for the screens, they are generally preferred for inclusion. The function of the anticurl layer is to balance the forces exerted by the layers coated on the opposite major surface of the screen support which, if left unchecked, cause the screen to assume a non-planar configuration--e.g., to curl or roll up on itself. Materials forming the anticurl layers can be chosen from among those identified above for use as binders and overcoats. Generally an anticurl layer is formed of the same polymer as the overcoat on the opposite side of the support. For example, cellulose acetate is preferred for both overcoat and anticurl layers.

To prevent blocking, particularly adhesion of the radiographic element and intensifying screen, the overcoats of the phosphor layers can include a matting agent, although matting agents are more commonly included in radiographic elements than in screens. Useful matting agents can be chosen from among those cited by Research Disclosure, Item 17643, cited above, Section XVI. A variety of other optional materials can be included in the surface coatings of the intensifying screens, such as materials to reduce static electrical charge accumulation, plasticizers, lubricants, and the like, but such materials are more commonly included in the radiographic elements which come into contact with the intensifying screens.

## Examples

The practice of this invention can be further appreciated by reference to the following examples. The example subscript (c) indicates that the example does not satisfy the requirements of the invention and is provided solely for the purpose of comparison. When the concentration of niobium is provided as mole percent, this value can be converted to value x used in formula (I) simply by dividing the mole percent niobium by 100. The amounts of starting materials for forming the phosphors are in each instance reported in grams.

In the numbered examples the subscripts A to E are added to the example number to indicate a niobium level corresponding to that of corresponding example A to E.

Method of sample evaluation

All phosphor preparations were characterized for phase purity and lattice parameters using x-ray powder diffraction. Samples were characterized as pure if the only phases present were the hexagonal (ordered corundum) phase or the hexagonal phase in combination with small amounts of starting materials. X-ray powder diffraction patterns were taken using an Enraf Nonius Guinier-DeWolff model 552™ camera. Patterns were taken using the K alpha 1 line of copper. The guinier film was digitized using a scanning densitometer, and line positions were corrected using silver as an internal standard. Lattice constants were calculated for the hexagonal phase using a least squares method. The a-axis and c-axis lattice constants are reported in Angstroms.

Prompt emission spectra and relative emissive power under x-ray excitation were measured on samples of phosphors packed into planchettes which were 2.54 cm (1 inch) in diameter and 0.64 cm (0.25 inch) thick. The x-rays from a tungsten tube operating at 28 kVp and 30 mA passed through 1.31 mm Al and .05 mm Mo filters before exciting the sample. The luminescent emission was detected by a spectrometer which has been calibrated to within % 0.5 nm with a resolution of better than 2 nm (full width at half maximum). The intensity calibration was performed using two NBS-traceable sources, which yielded an arbitrary intensity scale proportional to Watts/nm/cm2. The integrated emission intensity of a spectral region is calculated by adding all data points within this region and multiplying by the bandwidth of the region. The region used in the examples below is from 300nm to 550 nm. The x-ray excited prompt emission of the samples was measured by recording the voltage of an IP-28™ photomultiplier when it was exposed to the light emitted by the sample irradiated by filtered x-rays from a tungsten x-ray source operating at 70 kVp and 10 mA. The filtration used for these experiments was 0.5 mm Cu and 1 mm Al.

The composition of the samples was established by a combination of x-ray fluorescence techniques and laser induced mass spectra. Standard compounds were prepared for calibration of the x-ray fluorescence measurements, and the presence of the lighter elements was established by laser induced mass spectra. Laser induced mass spectra for negative ions were also used to verify that no anions other than oxygen were present in the samples. The absence of any foreign anions in the negative ion spectra demonstrated that all phases found in the examples reported below were oxide phases.

Examples A-E

These examples have as their purpose to demonstrate the effect of niobium on performance in the absence of an alkali metal activator. Compounds satisfying the general formula

$$Mg_4Ta_{2-2x}Nb_{2x}O_9$$

were prepared by heating the quantities (indicated in grams) of intimately mixed powders indicated in Table I below for 12 hours at 1400°C in alumina crucibles.

### Table I

| Example | mol% Nb | MgO | $Ta_2O_5$ | $Nb_2O_5$ |
|---------|---------|-------|-----------|-----------|
| A(c) | 0 | 1.693 | 4.419 | 0.000 |
| B(c) | 1 | 1.693 | 4.375 | 0.027 |
| C(c) | 50 | 1.693 | 2.209 | 1.329 |
| D(c) | 99 | 2.540 | 0.066 | 3.947 |
| E(c) | 100 | 2.540 | 0.000 | 3.987 |

X-ray powder diffraction analysis was carried out on Examples A-E. The cell parameters of the hexagonal (ordered corundum crystalline) phase were calculated for each example. The results are shown below in Table II.

### Table II

| Example | mol% Nb | a-axis | c-axis | Pure |
|---------|---------|--------|--------|------|
| A(c) | 0 | 5.1618 | 14.0465 | Yes |
| B(c) | 1 | 5.1618 | 14.0441 | Yes |
| C(c) | 50 | 5.1613 | 14.0342 | Yes |
| D(c) | 99 | 5.1630 | 14.0252 | No |
| E(c) | 100 | 5.1629 | 14.0199 | No |

The impurity in examples D and E was $Mg_5Nb_4O_{15}$. The major phase in all cases was the hexagonal phase. The cell parameters found in example A was in excellent agreement with those previously published.

Table III below shows the results for the x-ray excited luminescence of examples A-E. All materials in examples A-E emit between 350 and 500 nm. The % Nb Ref. column in Table III merely sets the luminescence of each of examples A-E equal to 100. In the subsequent tables this column references the performance of alkali metal doped phosphors to the performance of examples A-E having the same niobium content.

### Table III

| Example | Measured | Emissive Power | |
|---------|----------|----------------|--|
| | | % Nb Ref. | % $CaWO_4$ |
| A(c) | 820 | 100 | 65 |
| B(c) | 2255 | 100 | 179 |
| C(c) | 1825 | 100 | 145 |
| D(c) | 476 | 100 | 38 |
| E(c) | 758 | 100 | 60 |

Table III demonstrates that the inclusion of niobium in concentrations of up to 50 mole percent (x = 0.5) in $Mg_4Ta_{2-2x}Nb_{2x}O_9$ markedly increased luminescence. Further, luminescence was increased over that obtained from a calcium tungstate phosphor (Sylvania type 2402) used as a standard.

Examples 1-5

These examples have as their purpose to demonstrate the effect of preparing the phosphors of Examples A-E in the presence of lithium. The presence of lithium during phosphor preparation sharply curtails luminescence.

Examples 1-5 were similar to Examples A-E, except for variances in starting materials and performance noted in Tables IV, V and VI, which correspond to Tables I-III above and the modification of firing for 3 hours at 1250°C followed by washing with water after cooling.

### Table IV

| Example | mol% Nb | MgO | $Ta_2O_5$ | $Nb_2O_5$ | $Li_2SO_4$ |
|---------|---------|------|-----------|-----------|-----------|
| 1A(c) | 0 | 1.693 | 4.419 | 0.000 | 6.112 |
| 2B(c) | 1 | 1.693 | 4.375 | 0.027 | 6.094 |
| 3C(c) | 50 | 1.693 | 2.209 | 1.329 | 5.232 |
| 4D(c) | 99 | 2.540 | 0.066 | 3.947 | 6.553 |
| 5E(c) | 100 | 2.540 | 0.000 | 3.987 | 6.527 |

Table V

| Example | mol% Nb | a-axis | c-axis | Pure |
|---------|---------|--------|--------|------|
| 1A(c) | 0 | 5.1607 | 14.0500 | No |
| 2B(c) | 1 | 5.1590 | 14.0460 | No |
| 3C(c) | 50 | 5.1617 | 14.0342 | No |
| 4D(c) | 99 | 5.1603 | 14.0498 | Yes |
| 5E(c) | 100 | 5.1622 | 14.0240 | Yes |

Table VI

| Example | Emissive Power | | |
|---------|----------|-----------|------------|
| | Measured | % Nb Ref. | % CaWO$_4$ |
| 1A(c) | 332 | 40 | 26 |
| 2B(c) | 612 | 27 | 49 |
| 3C(c) | 91 | 5 | 7 |
| 4D(c) | 0 | 0 | 0 |
| 5E(c) | 21 | 3 | 2 |

From the performance reported in Table VI, it is apparent that the incorporation of any significant amount of lithium in the phosphor is incompatible with obtaining enhanced luminescence.

Examples 6 - 10

These examples have as their purpose to demonstrate the effect of preparing the phosphors of Examples A-E in the presence of sodium.

Examples 6-10 were repetitions of Examples 1-5, except for variances in starting materials and performance noted in Tables VII, VIII and IX, which correspond to Tables I-III above.

Table VII

| Example | mol% Nb | MgO | Ta$_2$O$_5$ | Nb2O$_5$ | Na$_2$SO$_4$ |
|---------|---------|-------|-------|--------|--------|
| 6A(c) | 0 | 1.693 | 4.419 | 0.000 | 6.112 |
| 7B(c) | 1 | 1.693 | 4.375 | 0.027 | 6.094 |
| 8C(c) | 50 | 1.693 | 2.209 | 1.329 | 5.232 |
| 9D(c) | 99 | 2.540 | 0.066 | 3.947 | 6.553 |
| 10E(c) | 100 | 2.540 | 0.000 | 3.987 | 6.527 |

Table VIII

| Example | mol% Nb | a-axis | c-axis | Pure |
|---------|---------|--------|--------|------|
| 6A(c) | 0 | 5.1612 | 14.0425 | No |
| 7B(c) | 1 | 5.1617 | 14.0428 | No |
| 8C(c) | 50 | 5.1617 | 14.0312 | No |
| 9D(c) | 99 | 5.1628 | 14.0235 | Yes |
| 10E(c) | 100 | 5.1617 | 14.0208 | Yes |

## Table IX

| Example | Emissive Power | | |
|---------|----------|----------|----------|
|         | Measured | % Nb Ref. | % CaWO$_4$ |
| 6A(c)   | 808      | 99       | 64       |
| 7B(c)   | 2071     | 92       | 164      |
| 8C(c)   | 1138     | 62       | 90       |
| 9D(c)   | 410      | 86       | 33       |
| 10E(c)  | 379      | 50       | 30       |

From the foregoing results it is clear that sodium does not act as an activator, but acts to decrease luminescence. However, since the decrease in luminescence is small, by using optimum or near optimum amounts of niobium, the luminescence of the phosphor can still remain higher than that of a reference calcium tungstate phosphor.

Examples 11 - 15

These examples have as their purpose to demonstrate the effect of preparing the phosphors of Examples A-E in the presence of potassium.

Examples 11-15 were repetitions of Examples 1-5, except for variances in starting materials and performance noted in Tables X, XI and XII, which correspond to Tables I-III above.

## Table X

| Example | mol% Nb | MgO   | Ta$_2$O$_5$ | Nb$_2$O$_5$ | K$_2$SO$_4$ |
|---------|---------|-------|-------|-------|-------|
| 11A(c)  | 0       | 1.693 | 4.419 | 0.000 | 6.112 |
| 12B(c)  | 1       | 1.693 | 4.375 | 0.027 | 6.094 |
| 13C(c)  | 50      | 1.693 | 2.209 | 1.329 | 5.232 |
| 14D(c)  | 99      | 2.540 | 0.066 | 3.947 | 6.553 |
| 15E(c)  | 100     | 2.540 | 0.000 | 3.987 | 6.527 |

## Table XI

| Example | mol% Nb | a-axis | c-axis | Pure |
|---------|---------|--------|--------|------|
| 11A(c)  | 0       | 5.1607 | 14.0411 | Yes |
| 12B(c)  | 1       | 5.1619 | 14.0442 | Yes |
| 13C(c)  | 50      | 5.1616 | 14.0345 | Yes |
| 14D(c)  | 99      | 5.1626 | 14.0231 | No  |
| 15E(c)  | 100     | 5.1623 | 14.0190 | No  |

## Table XII

| Example | Emissive Power Measured | % Nb Ref. | % CaWO₄ |
|---------|-------------------------|-----------|---------|
| 11A(c) | 1410 | 172 | 112 |
| 12B(c) | 2783 | 123 | 221 |
| 13C(c) | 1659 | 91 | 132 |
| 14D(c) | 1214 | 255 | 96 |
| 15E(c) | 1119 | 148 | 89 |

By comparing the results of Tables III and XII it is apparent that potassium acts as activator of the magnesium tantalum niobium oxide phosphor only when the concentration of niobium is low (i.e., x is less than 0.5, preferably up to 0.2 and optimally up to 0.1).

Examples 16 - 20

These examples have as their purpose to demonstrate the effect of preparing the phosphors of Examples A-E in the presence of rubidium.

Examples 16-20 were repetitions of Examples 1-5, except for variances in starting materials and performance noted in Tables XIII, XIV and XV, which correspond to Tables I-III above.

## Table XIII

| Example | mol% Nb | MgO | Ta₂O₅ | Nb₂O₅ | Rb₂SO₄ |
|---------|---------|-------|-------|-------|--------|
| 16A(c) | 0 | 1.693 | 4.419 | 0.000 | 6.112 |
| 17B | 1 | 1.693 | 4.375 | 0.027 | 6.094 |
| 18C(c) | 50 | 1.693 | 2.209 | 1.329 | 5.232 |
| 19D(c) | 99 | 2.540 | 0.066 | 3.947 | 6.553 |
| 20E(c) | 100 | 2.540 | 0.000 | 3.987 | 6.527 |

## Table XIV

| Example | mol% Nb | a-axis | c-axis | Pure |
|---------|---------|--------|--------|------|
| 16A(c) | 0 | 5.1618 | 14.0444 | Yes |
| 17B | 1 | 5.1622 | 14.0440 | Yes |
| 18C(c) | 50 | 5.1616 | 14.0320 | Yes |
| 19D(c) | 99 | 5.1622 | 14.0213 | Yes |
| 20E(c) | 100 | 5.1624 | 14.0124 | Yes |

### Table XV

| Example | Measured | % Nb Ref. | % CaWO$_4$ |
|---------|----------|-----------|------------|
| 16A(c)  | 1106     | 135       | 88         |
| 17B     | 2810     | 125       | 223        |
| 18C(c)  | 1737     | 95        | 138        |
| 19D(c)  | 763      | 160       | 61         |
| 20E(c)  | 1082     | 143       | 86         |

(Emissive Power spans Measured, % Nb Ref., % CaWO$_4$ columns)

By comparing the results of Tables III and XV it is apparent that potassium acts as activator of the magnesium tantalum niobium oxide phosphor only when the concentration of niobium is low (i.e., x is less than 0.5, preferably up to 0.2 and optimally up to 0.1).

Examples 21 - 25

These examples have as their purpose to demonstrate the effect of preparing the phosphors of Examples A-E in the presence of cesium.

Examples 21-25 were repetitions of Examples 1-5, except for variances in starting materials and performance noted in Tables XVI, XVII and XVIII, which correspond to Tables I-III above.

### Table XVI

| Example | mol% Nb | MgO   | Ta$_2$O$_5$ | Nb$_2$O$_5$ | Cs$_2$SO$_4$ |
|---------|---------|-------|-------------|-------------|--------------|
| 21A(c)  | 0       | 1.693 | 4.419       | 0.000       | 6.112        |
| 22B     | 1       | 1.693 | 4.375       | 0.027       | 6.094        |
| 23C(c)  | 50      | 1.693 | 2.209       | 1.329       | 5.232        |
| 24D(c)  | 99      | 2.540 | 0.066       | 3.947       | 6.553        |
| 25E(c)  | 100     | 2.540 | 0.000       | 3.987       | 6.527        |

### Table XVII

| Example | mol% Nb | a-axis | c-axis  | Pure |
|---------|---------|--------|---------|------|
| 21A(c)  | 0       | 5.1602 | 14.0389 | Yes  |
| 22B     | 1       | 5.1610 | 14.0420 | Yes  |
| 23C(c)  | 50      | 5.1618 | 14.0340 | Yes  |
| 24D(c)  | 99      | 5.1627 | 14.0228 | Yes  |
| 25E(c)  | 100     | 5.1610 | 14.0165 | Yes  |

### Table XVIII

| Example | Measured | % Nb Ref. | % CaWO$_4$ |
|---|---|---|---|
| 21A(c) | 1631 | 199 | 129 |
| 22B | 3284 | 146 | 260 |
| 23C(c) | 1587 | 87 | 126 |
| 24D(c) | 1200 | 252 | 95 |
| 25E(c) | 1252 | 165 | 99 |

(Emissive Power)

From the foregoing results it is clear that cesium acts as an activator. Cesium acts as an activator for magnesium tantalum oxide which does not contain niobium, raising emissions to higher levels than those demonstrated by the calcium tungstate reference. When cesium is present as an activator in magnesium tantalum niobium oxide, higher levels of emission are observed than in the calcium tungstate reference. Cesium increases emission to high levels and beyond those obtained by inclusion of niobium alone when lower levels of niobium (i.e., the preferred levels of niobium previously identified) are employed. At lower niobium levels cesium achieves significantly higher levels of emission than those realized employing potassium.

Examples 26 & 27

These examples have as their purpose to demonstrate the effect of preparing the phosphors of Examples C-E in the presence of equal amounts of potassium and rubidium (Ex. 26) or potassium and cesium (Ex. 27).

Examples 26 and 27 were repetitions of Example B, except for variances in starting materials and performance noted in Tables XIX, XX and XXI, which correspond to Tables I-III above.

### Table XIX

| Example | mol% Nb | MgO | Nb$_2$O$_5$ | Ta$_2$O$_5$ | K$_2$SO$_4$ | M$_2$SO$_4$ |
|---|---|---|---|---|---|---|
| 26B | 1 | 1.693 | 2.027 | 4.375 | 3.047 | 3.047 (M=Rb) |
| 27B | 1 | 1.693 | 2.027 | 4.375 | 3.047 | 3.047 (M=Cs) |

### Table XX

| Example | mol% Nb | a-axis | c-axis | Pure |
|---|---|---|---|---|
| 26B | 1 | 5.1617 | 14.0411 | No |
| 27B | 1 | 5.1619 | 14.0430 | No |

### Table XXI

| Example | Measured | % Nb Ref. | % CaWO$_4$ |
|---|---|---|---|
| 26B | 3171 | 141 | 251 |
| 27B | 2896 | 128 | 230 |

(Emissive Power)

From the foregoing results it is clear that the prescence of either potassium and rubidium or potassium and cesium during phosphor preparation strongly activates the phosphor.

## Claims

1. An x-ray intensifying screen comprised of

   a support and

   a fluorescent layer containing a polymeric binder and a particulate phosphor

   characterized in that the particulate phosphor is in an ordered corundum crystalline form consisting essentially of

   $$Mg_4Ta_{2-2x}Nb_{2x}O_9{:}M_yM'_{y'}$$

   where

   M is at least one of rubidium and cesium,

   M' is at least one of sodium and potassium,

   x is in the range of from $5 \times 10^{-4}$ to 0.2,

   y is an activating amount, and

   y + y' is less than 1.0.

2. An x-ray intensifying screen according to claim 1 further characterized in that

   x is in the range of from $5 \times 10^{-3}$ to 0.1.

3. An x-ray intensifying screen according to claim 1 or 2 further characterized in that

   y is at least $2 \times 10^{-3}$ and

   y + y' is less than 0.5.

4. An x-ray intensifying screen according to claim 3 further characterized in that

   y is at least $5 \times 10^{-3}$ and

   y + y' is less than 0.2.

5. A x-ray intensifying screen according to any one of claims 1 to 4 inclusive further characterized in that y' is less than an activating amount.

6. An x-ray intensifying screen according to any one of claims 1 to 5 inclusive further characterized in that M is rubidium.

7. An x-ray intensifying screen according to any one of claims 1 to 5 inclusive further characterized in that M is cesium.

8. An x-ray intensifying screen according to any one of claims 1 to 7 inclusive further characterized in that M' is sodium.

9. An x-ray intensifying screen according to any one of claims 1 to 7 inclusive further characterized in that M' is potassium.


## Patentansprüche

1. Röntgenstrahl-Verstärkerschirm mit

   einem Träger, und

   einer fluoreszierenden Schicht mit einem polymeren Bindemittel und einem teilchenförmigen Leuchtstoff, dadurch gekennzeichnet, daß der teilchenförmige Leuchtstoff in geordneter kristalliner Korundform vorliegt und besteht im wesentlichen aus:

   $$Mg_4Ta_{2-2x}Nb_{2x}O_9{:}M_yM'_{y'}$$

   worin bedeuten:

   M mindestens eines der Elemente Rubidium und Cäsium,

   M' mindestens eines der Elemente Natrium und Kalium,

   x ein Zahlenwert im Bereich von $5 \times 10^{-4}$ bis 0,2,

   y eine aktivierende Menge, und

   y + y' ein Zahlenwert von kleiner als 1,0 .

2. Röntgenstrahl-Verstärkerschirm nach Anspruch 1, weiter dadurch gekennzeichnet, daß

   x im Bereich von $5 \times 10^{-3}$ bis 0,1 liegt.

**3.** Röntgenstrahl-Verstärkerschirm nach Anspruch 1 oder 2, weiter dadurch gekennzeichnet, daß
y ein Wert von mindestens $2 \times 10^{-3}$ ist, und
y + y' ein Zahlenwert von kleiner als 0,5 ist.

**4.** Röntgenstrahl-Verstärkerschirm nach Anspruch 3, weiter dadurch gekennzeichnet, daß
y ein Zahlenwert von mindestens $5 \times 10^{-3}$ ist, und
y + y' ein Zahlenwert von kleiner als 0,2 ist.

**5.** Röntgenstrahl-Verstärkerschirm nach einem der Ansprüche 1 - 4 einschließlich, weiter dadurch gekennzeichnet, daß y' geringer als eine aktivierende Menge ist.

**6.** Röntgenstrahl-Verstärkerschirm nach einem der Ansprüche 1 - 5 einschließlich, weiter dadurch gekennzeichnet, daß M für Rubidium steht.

**7.** Röntgenstrahl-Verstärkerschirm nach einem der Ansprüche 1 - 5 einschließlich, weiter dadurch gekennzeichnet, daß M für Cäsium steht.

**8.** Röntgenstrahl-Verstärkerschirm nach einem der Ansprüche 1 - 7 einschließlich, weiter dadurch gekennzeichnet, daß M' für Natrium steht.

**9.** Röntgenstrahl-Verstärkerschirm nach einem der Ansprüche 1 - 7 einschließlich, weiter dadurch gekennzeichnet, daß M' für Kalium steht.


## Revendications

**1.** Ecran renforçateur de rayons X comprenant :
un support
une couche fluorescente contenant un liant polymère
et une substance luminescente particulaire caractérisé en ce que la substance luminescente particulaire est sous la forme cristalline ordonnée du corindon et comprend essentiellement :
$$Mg_4Ta_{2-2x}Nb_{2x}O_9:M_yM'_{y'}$$
où
M est le rubidium et/ou le césium,
M' est le sodium et/ou potassium
x est compris entre $5 \times 10^{-4}$ et 0,2,
y est une quantité permettant l'activation, et
y + y' est inférieur à 1,0.

**2.** Ecran renforçateur de rayons X selon la revendication 1 dans lequel x est compris entre $5 \times 10^{-3}$ et 0,1.

**3.** Ecran renforçateur de rayons X selon la revendication 1 ou 2 dans lequel
y est au moins $2 \times 10^{-3}$
y + y' est inférieur à 0,5.

**4.** Ecran renforçateur de rayons X selon la revendication 3 dans lequel
y est au moins $5 \times 10^{-3}$ et
y + y' est inférieur à 0,2.

**5.** Ecran renforçateur de rayons X selon l'une quelconque des revendications 1 à 4 dans lequel y' est inférieur à la quantité permettant à l'activation.

**6.** Ecran renforçateur de rayons X selon l'une quelconque des revendications 1 à 5 dans lequel M est le rubidium.

**7.** Ecran renforçateur de rayons X selon l'une quelconque des revendications 1 à 5 dans lequel M est le césium.

**8.** Ecran renforçateur de rayons X selon l'une quelconque des revendications 1 à 7 dans lequel M' est le sodium.

9. Ecran renforçateur de rayons X selon l'une quelconque des revendications 1 à 7 dans lequel M' est le potassium.